(19) 

**Europäisches Patentamt**

**European Patent Office**

**Office européen des brevets**

(11) **EP 4 744 892 A1**

(12) # EUROPEAN PATENT APPLICATION
published in accordance with Art. 153(4) EPC

(43) Date of publication:
**20.05.2026 Bulletin 2026/21**

(21) Application number: **24854178.1**

(22) Date of filing: **08.08.2024**

(51) International Patent Classification (IPC):
*B32B 27/28* (2006.01)    *B32B 1/08* (2006.01)
*B32B 27/30* (2006.01)    *B32B 27/34* (2006.01)
*C08L 23/04* (2006.01)    *C08L 27/12* (2006.01)
*C08L 77/00* (2006.01)    *F16L 11/04* (2006.01)

(52) Cooperative Patent Classification (CPC):
**B32B 1/08; B32B 27/28; B32B 27/30; B32B 27/34;
C08L 23/04; C08L 27/12; C08L 77/00; F16L 11/04**

(86) International application number:
**PCT/JP2024/028566**

(87) International publication number:
**WO 2025/037588 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.08.2023   JP 2023132144**
              **14.08.2023   JP 2023132164**

(71) Applicant: **Daikin Industries, Ltd.**
**Osaka-shi, Osaka 530-0001 (JP)**

(72) Inventors:
• **KAMIYA, Yukinori**
 **Osaka-Shi, Osaka 530-0001 (JP)**
• **KOMAZAWA, Kozue**
 **Osaka-Shi, Osaka 530-0001 (JP)**

(74) Representative: **Hoffmann Eitle**
**Patent- und Rechtsanwälte PartmbB
Arabellastraße 30
81925 München (DE)**

(54) **LAMINATE IN CONTACT WITH FUEL**

(57)    Provided is a laminate that comes into contact with a fuel, wherein the fuel includes at least a compound (1) consisting of carbon atom, hydrogen atom and oxygen atom and having carbonyl group or ether bond, and the laminate comprises at least a non-fluorinated polymer layer containing at least one non-fluorinated polymer selected from the group consisting of an ethylene/vinyl alcohol copolymer and an aromatic polyamide.

EP 4 744 892 A1

**Description**

TECHNICAL FIELD

The present disclosure relates to a laminate in contact with fuel.

BACKGROUND ART

Patent Document 1 discloses a laminate structure composed of two or more layers including at least a layer (a) composed of an aliphatic polyamide (A) and a layer (b) composed of a semi-aromatic polyamide (B) including diamine units containing 60 mol% or more of aliphatic diamine units having 9 to 13 carbon atoms relative to the total diamine units and dicarboxylic acid units including 50 mol% or more of terephthalic acid units and/or naphthalene dicarboxylic acid units relative to the total dicarboxylic acid units, with the layer (b) being disposed as the innermost layer.

RELATED ART

PATENT DOCUMENT

Patent Document 1: WO2005/102694

SUMMARY OF THE INVENTION

PROBLEM TO BE SOLVED BY THE INVENTION

An object of the present disclosure is to provide a laminate having excellent low fuel permeability to fuel containing a compound consisting of carbon atom, hydrogen atom and oxygen atom and having carbonyl group or ether bond.

MEANS FOR SOLVING THE PROBLEM

The present disclosure provides a laminate that comes into contact with a fuel, wherein the fuel contains at least a compound (1) consisting of carbon atom, hydrogen atom and oxygen atom and having carbonyl group or ether bond, and the laminate comprises at least a non-fluorinated polymer layer comprising at least one non-fluorinated polymer selected from the group consisting of an ethylene/vinyl alcohol copolymer and an aromatic polyamide.

EFFECTS OF INVENTION

The present disclosure can provide a laminate having excellent low fuel permeability to fuel containing a compound consisting of carbon atom, hydrogen atom and oxygen atom and having carbonyl group or ether bond.

DESCRIPTION OF EMBODIMENTS

In the following, specific embodiments of the present disclosure will be described in detail, but the present disclosure is not limited to the following embodiments.
Heretofore, laminates that exhibit low fuel permeability to gasoline or low fuel permeability to alcohol-containing gasoline have been known.
For example, Patent Document 1 discloses the measurement of fuel permeation coefficient of a laminate structure having the above structure for alcohol-containing gasoline obtained by mixing Fuel C (isooctane/toluene = 50/50 volume ratio) and ethanol at a volume ratio of 90/10.
However, what kind of laminated structure is needed for inhibiting permeation of fuel containing a compound consisting of carbon atom, hydrogen atom and oxygen atom and having carbonyl group or ether bond has not been fully explored to date.
We have now found that laminates exhibit surprisingly low fuel permeability to fuel containing a compound consisting of carbon atom, hydrogen atom and oxygen atom and having carbonyl group or ether bond by introducing a non-fluorinated polymer layer comprising at least one non-fluorinated polymer selected from the group consisting of an ethylene/vinyl alcohol copolymer and an aromatic polyamide into the laminate.
Thus, the laminate of the present disclosure is a laminate that comes into contact with a fuel containing at least a compound (1) consisting of carbon atom, hydrogen atom and oxygen atom and having carbonyl group or ether bond, the laminate comprising at least a non-fluorinated polymer layer comprising at least one non-fluorinated polymer selected from the group consisting of an ethylene/vinyl alcohol copolymer and an aromatic polyamide.

In the following, the structure of the laminate of the present disclosure will be described in detail.

(Fuel)

The laminate of the present disclosure is used in contact with fuel containing at least a compound (1) consisting of carbon atom, hydrogen atom and oxygen atom and having carbonyl group or ether bond. In an embodiment, the laminate of the present disclosure is used for inhibiting permeation of fuel containing at least a compound (1) consisting of carbon atom, hydrogen atom and oxygen atom and having carbonyl group or ether bond. In an embodiment, the laminate of the present disclosure is a tube or hose and used for distributing and/or inhibiting permeation of fuel containing at least a compound (1) consisting of carbon atom, hydrogen atom and oxygen atom and having carbonyl group or ether bond.

That is, the present disclosure includes the use of a laminate (tube or hose) for distributing and/or inhibiting permeation of fuel containing at least a compound (1) consisting of a carbon atom, a hydrogen atom and an oxygen atom and having a carbonyl group or an ether bond.

The present disclosure also includes a method for distributing fuel containing at least a compound (1) consisting of a carbon atom, a hydrogen atom and an oxygen atom and having a carbonyl group or an ether bond, wherein a laminate (tube or hose) is used while the laminate is in contact with the fuel.

The compound (1) may be synthesized from hydrogen and carbon dioxide. The compound synthesized from hydrogen and carbon dioxide is also called a synthetic fuel, which is expected to contribute to reduction of carbon dioxide emissions. The present inventors have studied and found that while conventional laminates can inhibit the permeation of conventional fuels such as gasoline, diesel fuel, and alcohol fuel, they cannot sufficiently inhibit the permeation of such synthetic fuel. In other words, the compound (1) exhibits permeability different from conventional fuels such as gasoline, diesel fuel, and alcohol fuel. Therefore, conventional knowledge cannot be utilized in selecting the layer composition of the laminate used in contact with the fuel containing compound (1). Then the present inventors have conducted intensive studies and have found a laminate having low fuel permeability even for the compound (1).

The compound (1) is preferably at least one selected from the group consisting of a carbonate ester, a chain ether and a cyclic ether, more preferably at least one selected from the group consisting of a carbonate ester and a cyclic ether, and even more preferably a carbonate ester.

Examples of compounds (1) include dimethyl carbonate, diethyl carbonate, dimethyl ether, methyl tert-butyl ether (MTBE), oxymethylene dimethyl ether and 1,3-dioxolane. The fuel includes one or two or more of these compounds. The compound (1) is preferably at least one selected from the group consisting of dimethyl carbonate and diethyl carbonate.

The fuel may include the compound (1) alone or may include the compound (1) and another fuel.

Examples of fuels include:

    a fuel containing the compound (1) alone,
    a fuel containing the compound (1) and alcohol,
    a fuel containing the compound (1) and gasoline,
    a fuel containing the compound (1), alcohol and gasoline, and
    a fuel containing the compound (1) and diesel fuel (gas oil)

The content of the compound (1) in the fuel may be 0.1 to 100% by volume. The content of the compound (1) in the fuel may be 1% by volume or more, 5% by volume or more or 10% by volume or more. The content of the compound (1) in the fuel may be 90% by volume or less, 80% by volume or less, 60% by volume or less, 40% by volume or less or 20% by volume or less.

In an embodiment, the fuel contains the compound (1) and alcohol. The laminate of the present disclosure has excellent low permeability also to fuel containing the compound (1) and alcohol.

Alcohol preferably has 1 to 5 carbon atoms, and is more preferably at least one selected from the group consisting of methanol, ethanol, propanol and butanol, and even more preferably at least one selected from the group consisting of methanol and ethanol.

The content of alcohol in the fuel may be 10 to 99.9% by volume. The content of alcohol in the fuel may be 20% by volume or more, 40% by volume or more or 80% by volume or more. The content of alcohol in the fuel may be 99% by volume or less, 95% by volume or less or 90% by volume or less.

When alcohol in the fuel is methanol, the content of methanol may be 10 to 99.9% by volume. The content of methanol in the fuel may be 80% by volume or less, 50% by volume or less, 30% by volume or less, or 20% by volume or less.

In an embodiment, the fuel contains the compound (1) and gasoline. The laminate of the present disclosure has excellent low permeability also to fuel containing the compound (1) and gasoline.

Gasoline may be obtained by purifying crude oil. Gasoline usually has a boiling point of 30 to 220°C.

The content of gasoline in the fuel may be 10 to 99.9% by volume. The content of gasoline in the fuel may be 20% by volume or more, 40% by volume or more or 80% by volume or more. The content of gasoline in the fuel may be 99% by volume or less, 95% by volume or less or 90% by volume or less.

In an embodiment, the fuel does not includes diesel fuel (gas oil). Diesel fuel may be obtained by purifying crude oil. Diesel fuel usually has a boiling point of more than 220°C and 350°C or less.

In an embodiment, the fuel contains the compound (1) and diesel fuel (gas oil).

Aliphatic polyamide with excellent acid resistance, alkali resistance, hydrolysis resistance and physical properties has been used as a material for forming tube or hose for diesel fuel. Unlike gasoline or alcohol-containing fuel, diesel fuel (gas oil) is less likely to permeate through aliphatic polyamide tube, and thus in view of inhibiting permeation of diesel fuel, selection of materials has not been considered.

The compound (1) may be synthesized from hydrogen and carbon dioxide. The compound synthesized from hydrogen and carbon dioxide is also called a synthetic fuel, which is expected to contribute to reduction of carbon dioxide emissions. Unlike gasoline or alcohol-containing fuel, diesel fuel (gas oil) is less likely to permeate through aliphatic polyamide tube, but if diesel fuel is mixed with such synthetic fuel, fuel has been found to permeate through the tube and diffuse into the outside. Thus, the present inventors have conducted intensive studies and have found a laminate having low fuel permeation also to fuel containing diesel fuel and the compound (1).

That is, we have now found that laminates exhibit surprisingly low fuel permeability to fuel containing diesel fuel and a compound consisting of a carbon atom, a hydrogen atom and an oxygen atom and having a carbonyl group or an ether bond by introducing a non-fluorinated polymer layer comprising at least one non-fluorinated polymer selected from the group consisting of an ethylene/vinyl alcohol copolymer and an aromatic polyamide into the laminate.

Diesel fuel may be obtained by purifying crude oil. Diesel fuel usually has a boiling point of more than 220°C and 350°C or less.

The content of diesel fuel in the fuel may be 10 to 99.9% by volume. The content of diesel fuel in the fuel may be 20% by volume or more, 40% by volume or more or 80% by volume or more. The content of diesel fuel in the fuel may be 99% by volume or less, 95% by volume or less or 90% by volume or less.

In an embodiment, the fuel does not include gasoline. Gasoline may be obtained by purifying crude oil. Gasoline usually has a boiling point of 30 to 220°C.

In an embodiment, the fuel does not include alcohol. Examples of alcohol include alcohol having 1 to 5 carbon atoms.

(Non-fluorinated polymer layer (A))

The laminate of the present disclosure comprises at least a non-fluorinated polymer layer (A) comprising at least one non-fluorinated polymer (A) selected from the group consisting of an ethylene/vinyl alcohol copolymer and an aromatic polyamide.

Thus, since the laminate of the present disclosure comprises at least a non-fluorinated polymer layer (A) and the non-fluorinated polymer layer (A) contains at least one non-fluorinated polymer (A) selected from the group consisting of an ethylene/vinyl alcohol copolymer and an aromatic polyamide, the laminate exhibits excellent low fuel permeability to fuel containing a compound consisting of a carbon atom, a hydrogen atom and an oxygen atom and having a carbonyl group or an ether bond. Surprisingly, when a non-fluorinated polymer other than the ethylene/vinyl alcohol copolymer or aromatic polyamide, for example, an aliphatic polyamide such as PA12, is used, sufficient low fuel permeability cannot be obtained.

The ethylene/vinyl alcohol copolymer used for the laminate of the present disclosure may be a thermoplastic resin. The ethylene/vinyl alcohol copolymer is obtained by saponifying an ethylene/vinyl acetate copolymer obtained from ethylene and vinyl acetate. The content ratio between ethylene and vinyl acetate to be copolymerized is suitably determined according to the proportion of the number of moles of the vinyl acetate unit to be specified by a formula mentioned below.

A preferable ethylene/vinyl alcohol copolymer is one in which the vinyl acetate unit X mol% and the saponification degree Y% satisfy $X \times Y/100 \geq 7$. If $X \times Y/100 < 7$, interlayer adhesion may be insufficient. $X \times Y/100 \geq 10$ is more preferable. The value of $X \times Y/100$ is a measure of a content of the hydroxyl group included by the ethylene/vinyl alcohol copolymer, and a larger value of $X \times Y/100$ means a higher content of the hydroxyl group included by the ethylene/vinyl alcohol copolymer.

The hydroxyl group is a group that may be involved in adhesion with a counterpart material to be laminated with the EVOH layer. A higher content of the hydroxyl group in the ethylene/vinyl alcohol copolymer causes the interlayer adhesion in the laminate to increase. In the present disclosure, the "counterpart material to be laminated" described above refers to a material laminated contiguously.

In the present disclosure, the "vinyl acetate unit X mol%" is the proportion of the number of moles of vinyl acetate [Ni] derived from vinyl acetate unit with respect to the total number of moles [N] of ethylene and vinyl acetate added in the molecule of the ethylene/vinyl alcohol copolymer, meaning the average value of the molar content Xi represented by the following formula:

$$\texttt{Xi (\%) = (Ni/N) } \times \texttt{ 100.}$$

The vinyl acetate unit X mol% is a value obtained by measurement using infrared absorption spectroscopy [IR].

In the present disclosure, the "vinyl acetate unit" is a portion on the molecular structure of the ethylene/vinyl alcohol copolymer, meaning the portion derived from vinyl acetate. The vinyl acetate unit may be saponified and have a hydroxyl group or may not be saponified and have an acetoxy group.

The "saponification degree" is a percentage representing the proportion of the number of saponified vinyl acetate units with respect to the total of the number of saponified vinyl acetate unit and the number of unsaponified vinyl acetate units. The saponification degree is a value obtained by measuring using infrared absorption spectroscopy [IR].

Examples of ethylene/vinyl alcohol copolymer in which X and Y satisfy the formula described above include commercially available products such as EVAL F101 (manufactured by Kuraray Co., Ltd., vinyl acetate unit X = 68.0 mol%; saponification degree Y = 95%; X × Y/100 = 64.6), Melthene H6051 (manufactured by TOSOH CORPORATION, vinyl acetate unit X = 11.2 mol%; saponification degree Y = 100%; X × Y/100 = 11.2), and TECHNOLINK K200 (manufactured by Taoka Chemical Co., Ltd., vinyl acetate unit X = 11.2 mol%; saponification degree Y = 85%; X × Y/100 = 9.52).

An ethylene/vinyl alcohol copolymer preferably has a MFR at 200°C of 0.5 g/10 min or more and 100 g/10 min or less. A case in which the MFR is less than 0.5 g/10 min or more than 100 g/10 min is not preferable because the difference between the melt viscosity of the ethylene/vinyl alcohol copolymer and the melt viscosity of the counterpart material tends to increase and thus unevenness may occur in the thickness of each layer. The preferable lower limit is 1 g/10 min, and the preferable upper limit is 50 g/10 min.

Aromatic polyamide used for the laminate of the present disclosure may be a thermoplastic resin. In the present disclosure, aromatic polyamide includes semi-aromatic polyamide and fully aromatic polyamide. In an embodiment, aromatic polyamide is a semi-aromatic polyamide including an aliphatic diamine unit and an aromatic dicarboxylic acid unit.

Examples of aliphatic diamines include 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,11-undecanediamine and 1,12-dodecanediamine. Of them 1,6-hexanediamine and 1,9-nonanediamine are preferred.

Examples of aromatic dicarboxylic acids include terephthalic acid, phthalic acid, isophthalic acid and naphthalene dicarboxylic acid. Among these, terephthalic acid is preferred.

The melting point of the semi-aromatic polyamide is preferably 200°C or more, and more preferably 250°C or more, and preferably 350°C or less.

In particular, aromatic polyamide is preferably polyamide 6T and polyamide 9T, and more preferably polyamide 9T.

The non-fluorinated polymer layer (A) may contain an additive such as a stabilizer including a thermal stabilizer, a reinforcing agent, a filler, an ultraviolet absorber and a pigment as long as the object of the present disclosure is not impaired. Properties of the non-fluorinated polymer, such as thermal stability, surface hardness, abrasion resistance, electrostatic properties and weatherability can be improved by using such additives.

In an embodiment, the non-fluorinated polymer layer (A) is not electrically conductive. In an embodiment, the non-fluorinated polymer layer (A) does not include an electroconductive filler.

(Electroconductive layer (N1))

The laminate of the present disclosure may further comprise an electroconductive layer (N1) which is electrically conductive and contains a non-fluorinated polymer (N1). The electroconductive layer (N1) may prevent the laminate from being electrostatic even when friction between the laminate and the fuel generates static electricity.

The Non-fluorinated polymer (N1) does not include a fluorine atom. A wide variety of polymers known as a thermoplastic resin may be used as the non-fluorinated polymer (N1). Examples of non-fluorinated polymer (N1) include a polyamide resin, a polyolefin-based resin, a vinyl chloride-based resin, a polyurethane resin, a polyester resin, a polyaramide resin, a polyimide resin, a polyamide-imide resin, a polyphenylene oxide resin, a polyacetal resin, a polycarbonate resin, an acryl-based resin, a styrene-based resin, an acrylonitrile/butadiene/styrene resin [ABS], a cellulose-based resin, a polyether ether ketone resin [PEEK], a polysulfone resin, a polyether sulfone resin [PES], a polyether imide resin, an ethylene/vinyl alcohol copolymer resin, a polyphenylene sulfide resin, a polybutylene naphthalate resin, a polybutylene terephthalate resin and a polyphthalamide resin [PPA].

The melting point of the non-fluorinated polymer (N1) is preferably 50°C or more, more preferably 100°C or more, even more preferably 150°C or more, still more preferably 200°C or more, and particular preferably 250°C or more, and preferably 400°C or less, more preferably 350°C or less, even more preferably 300°C or less, and still more preferably 250°C or less.

In particular, The non-fluorinated polymer (N1) constituting the electroconductive layer (N1)is preferably aromatic polyamide. The same aromatic polyamide constituting the non-fluorinated polymer layer (A) may be used as aromatic polyamide, and the aromatic polyamide is preferably the same one.

In an embodiment, aromatic polyamide constituting the electroconductive layer (N1) is aromatic polyamide including an aliphatic diamine unit and an aromatic dicarboxylic acid unit.

In particular, the aromatic polyamide constituting the electroconductive layer (N1)is preferably polyamide 6T and polyamide 9T, and more preferably polyamide 9T is more preferred as.

The electroconductive layer preferably (N1) contains an electroconductive filler. The electroconductive filler easily imparts electric conductivity to the electroconductive layer (N1) and may prevent the laminate from being electrostatic even when friction between the laminate and the fuel generates static electricity.

The electroconductive filler is not limited, and examples include powders of electroconductive simple substances or fibers of electroconductive simple substances such as metal and carbon; powders of electroconductive compounds such as zinc oxide; and powders having the surface which has been subjected to electroconductive treatment.

The powders of electroconductive simple substances or the fibers of electroconductive simple substances are not limited, and examples include metal powders of copper, nickel, and the like; metal fibers of iron, stainless steel, and the like; and carbon black, carbon fiber, carbon fibril described in, for example, Japanese Patent Laid-Open No. 3-174018, carbon nanotube, and carbon nanohorn.

The powders having the surface which has been subjected to electroconductive treatment are powders obtained by performing electroconductive treatment on the surface of non-electroconductive powders such as glass beads and titanium oxide. A method for the electroconductive treatment is not limited, and examples include metal sputtering and electroless plating. Among the electroconductive fillers described above, carbon black is advantageous in view of economy and is thus preferably used.

The content of the electroconductive filler is suitably selected according to the type of the non-fluorinated polymer (N1), the electroconductive performance required for the laminate, the molding conditions, and the like, and is preferably 1 part by mass or more and 30 parts by mass or less based on 100 parts by mass of the non-fluorinated polymer (N1). The more preferable lower limit is 5 parts by mass, and the more preferable upper limit is 20 parts by mass.

In addition to the electroconductive filler, the electroconductive layer (N1) may contain various additives, e.g., reinforcing agents, fillers, UV absorbers, and pigments as long as the object of the present disclosure is not impaired. Properties of the electroconductive layer (N1), such as surface hardness, abrasion resistance, electrostatic properties and weatherability can be improved by using such additives.

When the laminate of the present disclosure comprises the electroconductive layer (N1), the electroconductive layer (N1) is preferably configured to be in contact with fuel. By forming the contact surface between the laminate and fuel with the electroconductive layer (N1), the laminate may be prevented from being electrostatic even when friction between the laminate and the fuel generates static electricity.

Fluororesin layer (F)

The laminate of the present disclosure may further comprise a fluororesin layer (F) containing a fluororesin. The fluororesin is a partially crystalline fluoropolymer, and is not a fluoroelastomer but a fluoroplastic. The fluororesin has a melting point and has thermoplasticity. The fluororesin may be melt-fabricable or may be non melt-processible. In respect that a tube can be produced by melt extrusion forming with high productivity, the fluororesin is preferably a melt-fabricable fluororesin.

In the present disclosure, melt-fabricability means that polymer can be melted and processed using a conventional processing device such as an extruder and an injection molding machine. Accordingly, the melt-fabricable fluororesin usually has a melt flow rate of 0.01 g/10 minutes or more and 500 g/10 minutes or less.

Examples of melt-fabricable fluororesins include a tetrafluoroethylene (TFE)/perfluoro(alkylvinyl ether) (PAVE) copolymer, a tetrafluoroethylene (TFE)/hexafluoropropylene (HFP) copolymer, a TFE/ethylene copolymer [ETFE], a TFE/ethylene/HFP copolymer, a polymer containing chlorotrifluoroethylene (CTFE) unit, polyvinylidene fluoride [PVdF], a TFE/vinylidene fluoride (VdF) copolymer [VT], polyvinyl fluoride [PVF] and a TFE/HFP/VdF copolymer.

Examples of PAVE include perfluoro(methyl vinyl ether) (PMVE), perfluoro(ethyl vinyl ether) (PEVE) and perfluoro(propyl vinyl ether) (PPVE). Of these, PPVE is preferred. One or two or more of these can be used.

The fluororesin may have a polymerization unit based on other monomers in such a range of amount that essential characteristics of each fluororesin are not impaired. The other monomers can be suitably selected from, for example, TFE, HFP, ethylene, propylene, perfluoro(alkyl vinyl ether), perfluoroalkyl ethylene, hydrofluoroolefin, fluoroalkyl ethylene, perfluoro(alkyl aryl ether), and the like.

The melting point of the fluororesin is preferably 160°C or more, more preferably 190°C or more, even more preferably 230°C or more, particularly preferably 240°C or more, preferably less than 324°C, more preferably 320°C or less, even more preferably 300°C or less, particularly preferably 280°C or less, and most preferably 260°C or less.

The melt flow rate (MFR) of the fluororesin at an arbitrary temperature (for example, 265°C or 297°C) within the range of about 230 to 350°C, which is the molding temperature range of fluororesins in general, is preferably 0.5 g/10 min or more, more preferably 2.0 g/10 min or more, even more preferably 5.0 g/10 min or more, particularly preferably 10 g/10 min or more, most preferably 15 g/10 min or more, preferably 100 g/10 min or less, more preferably 50 g/10 min or less, even more preferably 40 g/10 min or less, and particularly preferably 35 g/10 min or less. The melt flow rate can be identified by measuring the mass (g) of the fluororesin flowing out from a nozzle having an inner diameter of 2 mm and a length of 8 mm per unit time (10 minutes) at an arbitrary temperature (for example, 265°C or 297°C) under an arbitrary load (for example, 2.16 kg or 5 kg) using a melt indexer, for example.

The fluororesin is preferably at least one selected from the group consisting of a TFE/perfluoro(alkylvinyl ether) (PAVE) copolymer, a tetrafluoroethylene (TFE)/hexafluoropropylene (HFP) copolymer, a TFE/ethylene copolymer [ETFE], a TFE/ethylene/HFP copolymer, a polymer containing CTFE unit, and a tetrafluoroethylene/hexafluoropropylene/vinylidene fluoride copolymer [THV], and is preferably at least one selected from the group consisting of a TFE/ethylene copolymer [ETFE], a TFE/ethylene/HFP copolymer and a polymer containing CTFE unit, and is more preferably at least one selected from the group consisting of a TFE/ethylene copolymer [ETFE] and a TFE/ethylene/HFP copolymer.

In the present disclosure, the composition of the fluororesin can be calculated by suitably combining NMR, FT-IR, an elemental analysis, and an X-ray fluorescence analysis according to the kind of monomer.

The mass ratio of TFE/HFP in a TFE/HFP copolymer is preferably 80 to 97/3 to 20 and more preferably 84 to 92/8 to 16.

The TFE/HFP copolymer may be a binary copolymer composed of TFE and HFP, and may further be a ternary copolymer composed of TFE, HFP, and a monomer copolymerizable therewith (for example, a TFE/HFP/PAVE copolymer).

The TFE/HFP copolymer is also preferably a TFE/HFP/PAVE copolymer containing a polymerization unit based on PAVE.

The mass ratio of TFE/HFP/PAVE in the TFE/HFP/PAVE copolymer is preferably 70 to 97/2.9 to 20/0.1 to 10 and more preferably 81 to 92/5 to 16/0.3 to 5.

The mass ratio of TFE/PAVE in a TFE/PAVE copolymer is preferably 90 to 99/1 to 10 and more preferably 92 to 97/3 to 8.

ETFE is a copolymer containing ethylene unit and TFE unit. ETFE is preferably a copolymer having a molar ratio of TFE unit to ethylene unit (TFE unit/ethylene unit) of 20/80 or more and 90/10 or less. A more preferable molar ratio is 37/63 or more and 85/15 or less, and an even more preferable molar ratio is 38/62 or more and 80/20 or less. The ETFE may be a copolymer composed of TFE, ethylene, and a monomer copolymerizable with TFE and ethylene. Examples of the copolymerizable monomer include monomers represented by the following formulas: $CH_2=CX^5Rf^3$, $CF_2=CFRf^3$, $CF_2=CFORf^3$, and $CH_2=C(Rf^3)_2$, wherein $X^5$ represents H or F, and $Rf^3$ represents a fluoroalkyl group that may contain an ether bond. Of these, preferable is at least one selected from the group consisting of fluorine-containing vinyl monomers represented by $CF_2=CFRf^3$, $CF_2=CFORf^3$, and $CH_2=CX^5Rf^3$, more preferable is at least one selected from the group consisting of HFP, perfluoro(alkyl vinyl ethers) represented by $CF_2=CF-ORf^4$, wherein $Rf^4$ represents a perfluoroalkyl group having 1 to 5 carbon atoms, and fluorine-containing vinyl monomers represented by $CH_2=CX^5Rf^3$, wherein $Rf^3$ represents a perfluoroalkyl group having 1 to 8 carbon atoms, and even more preferable is HFP. The monomer copolymerizable with TFE and ethylene may be an aliphatic unsaturated carboxylic acid such as itaconic acid and itaconic anhydride. The content of the monomer unit copolymerizable with TFE and ethylene in ETFE is preferably 0.1 mol% or more, preferably 0.2 mol%, preferably 10 mol% or less, more preferably 5 mol% or less, and particularly preferably 4 mol% or less.

The TFE/ethylene copolymer [ETFE] is also preferably a TFE/ethylene/HFP copolymer containing a polymerization unit based on HFP (HFP unit). The mass ratio of TFE/ethylene/HFP in the TFE/ethylene/HFP copolymer is preferably 40 to 65/30 to 59.5/0.5 to 20 and more preferably 40 to 65/30 to 59.5/0.5 to 10.

The melting point of ETFE is preferably 60°C or more, more preferably 170°C or more, even more preferably 180°C or more, particularly preferably 190°C or more, preferably less than 324°C, more preferably 320°C or less, even more preferably 300°C or less, particularly preferably 280°C or less, and most preferably 260°C or less.

The MFR (265°C) of ETFE is preferably 0.5 g/10 min or more, more preferably 2.0 g/10 min or more, even more preferably 5.0 g/10 min or more, particularly preferably 8 g/10 min or more, most preferably 10 g/10 min or more, preferably 100 g/10 min or less, more preferably 50 g/10 min or less, even more preferably 40 g/10 min or less, and particularly preferably 30 g/10 min or less, and most preferably 25 g/10 min or less. The MFR of ETFE is measured at a temperature of 297°C or 265°C under a load of 5 kg.

As ETFE, the ethylene/tetrafluoroethylene copolymer described in Japanese Patent Laid-Open No. 2019-90013 is also suitably used.

The polymer containing CTFE unit is preferably at least one selected from the group consisting of polychlorotrifluoroethylene [PCTFE] and a CTFE copolymer.

The content of the CTFE unit in the polymer containing CTFE unit is preferably 1.0 mol% or more, more preferably 5.0 mol% or more, even more preferably 10.0 mol% or more, and particularly preferably 15.0 mol% or more, and preferably 100 mol% or less, more preferably 75.0 mol% or less, even more preferably 50.0 mol% or less, and particularly preferably 30.0 mol% or less based on all monomer units because low fuel permeability is further improved.

Examples of polymers including CTFE unit include an ethylene/chlorotrifluoroethylene (CTFE) copolymer [ECTFE], polychlorotrifluoroethylene [PCTFE], a CTFE/tetrafluoroethylene (TFE) copolymer, and a TFE/vinylidene fluoride (VdF)/CTFE copolymer [VTC], and the polymer is preferably at least one selected from the group consisting of PCTFE, an ethylene/CTFE copolymer and a CTFE/TFE copolymer, and more preferably a CTFE/TFE copolymer from the viewpoint of low fuel permeability.

Examples of PCTFE include a CTFE homopolymer and a polymer containing CTFE unit and a small amount of a comonomer unit.

The melting point of PCTFE is preferably 150°C or more and more preferably 190°C or more, and preferably 230°C or less and more preferably 217°C or less. The melting point is the temperature corresponding to the maximum value in the heat-of-fusion curve when the temperature is raised at a rate of 10°C/min using a differential scanning calorimeter [DSC].

The flow value of PCTFE is preferably $1 \times 10^{-4}$ ($cm^3$/second) or more and preferably $5 \times 10^{-1}$ ($cm^3$/second) or less. The flow value is the volume of resin extruded per second when PCTFE is melted at 230°C in an elevated flow tester CFT-500D (manufactured by Shimadzu Corporation) and extruded from a nozzle with a diameter of 1 mm$\phi$ under a load of 100 kg.

The content of the TFE unit in PCTFE is preferably 95 mol% or more, more preferably 98 mol% or more, and even more preferably 99 mol% or more, and preferably 100 mol% or less.

The comonomer constituting the comonomer unit PCTFE may have is not limited as long as the monomer is copolymerizable with CTFE. Examples thereof include TFE, ethylene, vinylidene fluoride, perfluoroalkyl vinyl ether and hexafluoroethylene.

The ethylene/CTFE copolymer (ECTFE) is a copolymer containing ethylene unit and CTFE unit. Preferably, the ethylene unit is 46 to 52 mol%, and the CTFE unit is 54 to 48 mol%, based on the total of the ethylene unit and the CTFE unit. ECTFE may be a binary copolymer composed solely of ethylene unit and CTFE unit and may further contain a polymerization unit based on a monomer copolymerizable with ethylene and CTFE (for example, a fluoroalkyl vinyl ether (PAVE) derivative).

The content of a polymerization unit based on a monomer copolymerizable with ethylene and CTFE is preferably 0.01 mol% or more and preferably 5 mol% or less based on the total of the ethylene unit, the CTFE unit, and the polymerization unit based on the copolymerizable monomer.

The MFR of ECTFE (230°C) is preferably 0.5 g/10 min or more and preferably 100 g/10 min or less. The MFR of ECTFE is measured at a temperature of 230°C under a load of 2.16 kg.

The CTFE/TFE copolymer contains CTFE unit and TFE unit. The CTFE/TFE copolymer is particularly preferably a copolymer containing CTFE unit, TFE unit, and a monomer ($\alpha$) unit derived from a monomer ($\alpha$) copolymerizable therewith.

The monomer ($\alpha$) is not limited as long as it is a monomer copolymerizable with CTFE and TFE, and examples include ethylene (Et), VdF, perfluoro(alkyl vinyl ether) [PAVE] represented by $CF_2=CF-ORf^1$ (wherein $Rf^1$ is a perfluoroalkyl group having 1 to 8 carbon atoms), a vinyl monomer represented by $CX^3X^4=CX^5(CF_2)_nX^6$ (wherein $X^3$, $X^4$, and $X^5$ are the same or different and a hydrogen atom or a fluorine atom; $X^6$ is a hydrogen atom, a fluorine atom, or a chlorine atom; n is an integer of 1 to 10), and an alkyl perfluorovinyl ether derivative represented by $CF_2=CF-OCH_2-Rf^2$ (wherein $Rf^2$ is a perfluoroalkyl group having 1 to 5 carbon atoms). In particular, at least one selected from the group consisting of PAVE, the vinyl monomer, and the alkyl perfluorovinyl ether derivative is preferable, and at least one selected from the group consisting of PAVE and HFP is more preferable.

PAVE is preferably perfluoro(alkyl vinyl ether) represented by $CF_2=CF-ORf^3$ (wherein $Rf^3$ represents a perfluoroalkyl group having 1 to 5 carbon atoms), such as perfluoro(methyl vinyl ether) [PMVE], perfluoro(ethyl vinyl ether) [PEVE], perfluoro(propyl vinyl ether) [PPVE], and perfluoro (butyl vinyl ether), more preferably at least one selected from the group consisting of PMVE, PEVE, and PPVE, and even more preferably PPVE.

In the alkyl perfluorovinyl ether derivative, $Rf^2$ is preferably a perfluoroalkyl group having 1 to 3 carbon atoms, and more preferably $CF_2=CF-OCH_2-CF_2CF_3$.

As for the ratio of the CTFE unit to the TFE unit in the CTFE/TFE copolymer, preferably, the CTFE unit is 15.0 to 90.0 mol%, and the TFE unit is 85.0 to 10.0 mol%. More preferably, the CTFE unit is 15.0 to 50.0 mol%, and the TFE unit is 85.0 to 50.0 mol%. Even more preferably, the CTFE unit is 15.0 to 30.0 mol%, and the TFE unit is 85.0 to 70.0 mol%.

The CTFE/TFE copolymer preferably has 90.0 to 99.9 mol% of the CTFE unit and the TFE unit in total and 0.1 to 10.0 mol% of the monomer ($\alpha$) unit. When the monomer ($\alpha$) unit is less than 0.1 mol%, moldability, environmental stress crack resistance, and fuel crack resistance are likely poor, and when exceeding 10.0 mol%, fuel barrier properties, heat resistance, and mechanical properties tend to be poor.

The CTFE/TFE copolymer is particularly preferably a CTFE/TFE/PAVE copolymer.

Examples of PAVE in the CTFE/TFE/PAVE copolymer include perfluoro(methyl vinyl ether) [PMVE], perfluoro(ethyl vinyl ether) [PEVE], perfluoro(propyl vinyl ether) [PPVE], and perfluoro(butyl vinyl ether). In particular, at least one selected from the group consisting of PMVE, PEVE, and PPVE is preferable, and PPVE is more preferable.

In the CTFE/TFE/PAVE copolymer, the PAVE unit is preferably 0.5 mol% or more and preferably 5 mol% or less, based on all monomer units.

The melting point of the CTFE/TFE copolymer is preferably 90°C or more, more preferably 210°C or more, even more preferably 220°C or more, particularly preferably 230°C or more, most preferably 240°C or more, preferably less than 324°C, more preferably 320°C or less, even more preferably 270°C or less, and most preferably 260°C or less.

The MFR (297°C) of the CTFE/TFE copolymer is preferably 0.5 g/10 min or more, more preferably 2.0 g/10 min or more, even more preferably 5.0 g/10 min or more, particularly preferably 7 g/10 min or more, most preferably 10 g/10 min or more, preferably 100 g/10 min or less, more preferably 50 g/10 min or less, even more preferably 40 g/10 min or less, and particularly preferably 35 g/10 min or less. The MFR of the CTFE/TFE copolymer is measured at a temperature of 297°C under a load of 5 kg.

The fluororesin layer (F) is preferably electrically conductive. When the electroconductive filler is contained, it is possible to easily impart electric conductivity to the fluororesin (F) and prevent the laminate from being electrostatic even when friction between the laminate and the fuel generates static electricity.

The fluororesin layer (F) preferably contains an electroconductive filler. The electroconductive filler easily imparts electric conductivity to the fluororesin layer (F) and may prevent the laminate from being electrostatic even when friction between the laminate and the fuel generates static electricity.

The same electroconductive filler the electroconductive layer (N1) may contain may be used as the electroconductive filler, and the electroconductive layer is preferably the same one.

The content of the electroconductive filler is suitably selected according to the type of the fluororesin, the electroconductive performance required for the laminate, the molding conditions, and the like, and is preferably 1 part by mass or more and 30 parts by mass or less based on 100 parts by mass of the fluororesin. The preferable lower limit is 5 parts by mass, and the preferable upper limit is 20 parts by mass.

In addition to the electroconductive filler, the fluororesin layer (F) may contain various additives, e.g., reinforcing agents, fillers, UV absorbers, and pigments as long as the object of the present disclosure is not impaired. Properties of the fluororesin layer (F), such as surface hardness, abrasion resistance, electrostatic properties and weatherability can be improved by using such additives.

When the laminate of the present disclosure comprises the fluororesin layer (F), the fluororesin layer (F) is preferably configured to be in contact with fuel. By forming the contact surface between the laminate and fuel with the fluororesin layer (F), excellent fuel resistance is imparted to the laminate and the durability of the laminate is improved. Furthermore, when the fluororesin layer (F) is electrically conductive, the laminate may be prevented from being electrostatic by forming the contact surface between the laminate and fuel with the fluororesin layer (F) even when friction between the laminate and the fuel generates static electricity.

(Non-fluorinated polymer (N2))

The laminate of the present disclosure may further comprise a non-fluorinated polymer layer (N2) which is not electrically conductive and contains a non-fluorinated polymer (N2) (excluding the non-fluorinated polymer (A)). The non-fluorinated polymer (N2) is a non-fluorinated polymer other than the ethylene/vinyl alcohol copolymer or aromatic polyamide.

A wide variety of polymers known as a thermoplastic resin other than the ethylene/vinyl alcohol copolymer or aromatic polyamide may be used as the non-fluorinated polymer (N2). Examples of non-fluorinated polymer (N2) include an aliphatic polyamide resin, a polyolefin-based resin, a vinyl chloride-based resin, a polyurethane resin, a polyester resin, a polyaramide resin, a polyimide resin, a polyamide-imide resin, a polyphenylene oxide resin, a polyacetal resin, a polycarbonate resin, an acryl-based resin, a styrene-based resin, an acrylonitrile/butadiene/styrene resin [ABS], a cellulose-based resin, a polyether ether ketone resin [PEEK], a polysulfone resin, a polyether sulfone resin [PES], a polyether imide resin, a polyphenylene sulfide resin, a polybutylene naphthalate resin, a polybutylene terephthalate resin and a polyphthalamide resin [PPA].

The melting point of the non-fluorinated polymer (N1) is preferably 50°C or more, more preferably 100°C or more, and even more preferably 150°C or more, and preferably 400°C or less, more preferably 300°C or less, and even more preferably 250°C or less.

In particular, the non-fluorinated polymer (N2) is preferably at least one selected from the group consisting of an aliphatic polyamide resin and a polyolefin-based resin, and more preferably an aliphatic polyamide resin.

The aliphatic polyamide resin is what is called a nylon resin composed of a polymer in which an amide bond in the molecule is bonded to an aliphatic structure or an alicyclic structure.

The aliphatic polyamide resin (nylon resin) is not limited, and examples include polymers such as polyamide 6, polyamide 66, polyamide 11, polyamide 12, polyamide 610, polyamide 1010, polyamide 612, polyamide 6/66, polyamide 66/12, polyamide 46, a metaxylylenediamine/adipic acid copolymer, polyamide 62, polyamide 92, polyamide 122 and polyamide 142.

The aliphatic polyamide resin may be a polymer in which a structure without an amide bond as a repeating unit is block-copolymerized or graft-copolymerized with a part of the molecule. Examples of such aliphatic polyamide resins include polyamide-based elastomers such as a polyamide 6/polyester copolymer, a polyamide 6/polyether copolymer, a polyamide 12/polyester copolymer, and a polyamide 12/polyether copolymer. These polyamide-based elastomers are obtained by block copolymerization of a polyamide oligomer and a polyester oligomer via an ester bond, or obtained by block copolymerization of a polyamide oligomer and a polyether oligomer via an ether bond. Examples of the polyester oligomer include polycaprolactone and polyethylene adipate, and examples of the polyether oligomer include polyethylene glycol, polypropylene glycol, and polytetramethylene glycol. The polyamide-based elastomer is preferably a polyamide 6/polytetramethylene glycol copolymer or a polyamide 12/polytetramethylene glycol copolymer.

In particular, the aliphatic polyamide resin is preferably at least one selected from the group consisting of polyamide 6, polyamide 66, polyamide 11, polyamide 12, polyamide 610, polyamide 1010, polyamide 612, polyamide 62, polyamide 6/66, polyamide 66/12, a polyamide 6/polyester copolymer, a polyamide 6/polyether copolymer, a polyamide 12/polyester copolymer and a polyamide 12/polyether copolymer, and more preferably at least one selected from the group consisting of polyamide 11, polyamide 12 and polyamide 612 because sufficient mechanical strength can be obtained even if the layer composed of the aliphatic polyamide resin is thin.

The polyolefin-based resin is a resin having a monomer unit derived from a vinyl group-containing monomer that does not have a fluorine atom.

The polyolefin-based resin is not limited, and examples include polyolefins such as polyethylene, polypropylene, high-density polyolefin, and low-density polyolefin, and also modified polyolefins obtained by modifying the above polyolefins with maleic anhydride or the like, epoxy-modified polyolefins, and amine-modified polyolefins. Among these, high-density polyolefin is preferable.

The non-fluorinated polymer layer (N2) may contain an additive other than the electroconductive filler, such as a reinforcing agent, a filler, an ultraviolet absorber and a pigment as long as the object of the present disclosure is not impaired. Properties of the non-fluorinated polymer layer (N2), such as surface hardness, abrasion resistance, electrostatic properties and weatherability can be improved by using such additives.

The non-fluorinated polymer layer (N2) is not electrically conductive. The non-fluorinated polymer layer (N2) does not contain an electroconductive filler.

(Structure of laminate)

The laminate of the present disclosure comprises at least a non-fluorinated polymer layer (A) containing at least one non-fluorinated polymer (A) selected from the group consisting of an ethylene/vinyl alcohol copolymer and an aromatic polyamide. The number of layers of the laminate of the present disclosure is not limited as long as the number is 2 or more. The number of layers of the laminate of the disclosure may be 2 to 5.

The laminate of the present disclosure may comprise a polymer layer (B) containing polymer in addition to the non-fluorinated polymer layer (A) (excluding the non-fluorinated polymer layer (A)). Examples of polymer layers (B) include the electroconductive layer (N1), the fluororesin layer (F) and the non-fluorinated polymer layer (N2).

In the laminate of the present disclosure, while the non-fluorinated polymer layer (A) and he polymer layer (B) may be directly adhered, or may be adhered via another layer such as an adhesive layer, the two are preferably directly adhered.

Examples of the laminate of the present disclosure include a laminate comprising at least an electroconductive layer (N1) and a non-fluorinated polymer layer (A), and a laminate comprising at least a fluororesin layer (F) and a non-fluorinated polymer layer (A).

Examples of the laminate of the present disclosure include, for example,

a laminate comprising an electroconductive layer (N1)/a non-fluorinated polymer layer (A), a laminate comprising a fluororesin layer (F)/a non-fluorinated polymer layer (A) as an innermost layer/an outermost layer;
a laminate comprising an electroconductive layer (N1)/a non-fluorinated polymer layer (A)/a non-fluorinated polymer layer (N2), a laminate comprising a fluororesin layer (F)/a non-fluorinated polymer layer (A)/a non-fluorinated polymer layer (N2) as an innermost layer/an intermediate layer/an outermost layer;

a laminate comprising an electroconductive layer (N1)/a non-fluorinated polymer layer (N2)/a non-fluorinated polymer layer (A)/a non-fluorinated polymer layer (N2), a laminate comprising a fluororesin layer (F)/a non-fluorinated polymer layer (N2)/a non-fluorinated polymer layer (A)/a non-fluorinated polymer layer (N2) as an innermost layer/an inner layer/an intermediate layer/an outermost layer; and

a laminate comprising an electroconductive layer (N1)/a non-fluorinated polymer layer (N2)/a non-fluorinated polymer layer (A)/a non-fluorinated polymer layer (N2)/a non-fluorinated polymer layer (N2), a laminate comprising a fluororesin layer (F)/a non-fluorinated polymer layer (N2)/a non-fluorinated polymer layer (A)/a non-fluorinated polymer layer (N2)/a non-fluorinated polymer layer (N2) as an innermost layer/an inner layer/an intermediate layer/an outer layer/an outermost layer.

When the laminate of the present disclosure comprises 2 or more non-fluorinated polymer layers (A), the type of the non-fluorinated polymers (A) included in the respective layers may be the same or different. When the laminate of the present disclosure comprises 2 or more electroconductive layers (N1), the type of the non-fluorinated polymers (N1) included in the respective layers may be the same or different. When the laminate of the present disclosure comprises 2 or more fluororesin layers (F), the type of the fluororesins included in the respective layers may be the same or different. When the laminate of the present disclosure comprises 2 or more non-fluorinated polymer layers (N2), the type of the non-fluorinated polymers (N2) included in the respective layers may be the same or different. In the laminate of the present disclosure, the boundary between the layers that are in contact does not necessarily need to be clear, and the laminate may have a layer structure having a concentration gradient in which the molecular chains of the polymers forming the respective layers mutually enter the layers from the surfaces in contact with each other.

The laminate of the present disclosure may include other layers. The thickness, shape, and the like of each layer of the laminate of the present disclosure may be suitably selected according to the purpose of use, the situation of use, and the like.

The fuel permeation rate of the laminate of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

When fuel contains an alcohol, the fuel permeation rate of the laminate of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

When fuel contains gasoline, the fuel permeation rate of the laminate of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

When fuel contains diesel fuel (gas oil), the fuel permeation rate of the laminate of the present disclosure is preferably 8.0 $g/m^2/day$ or less, more preferably 5.0 $g/m^2/day$ or less, and even more preferably 3.0 $g/m^2/day$ or less.

The fuel permeation rate of the laminate is the rate at which a fuel including at least a compound (1) consisting of a carbon atom, a hydrogen atom and an oxygen atom and having a carbonyl group or an ether bond permeates the laminate. The fuel permeation rate of the laminate may be determined by making a tubular laminate, preparing fuel containing compound (1) at a predetermined concentration, sealing the fuel in the tubular laminate, leaving it at 60°C or 80°C, measuring the change in mass per hour, and calculating the fuel permeation rate from the mass change and the inner area of the tubular laminate. If the fuel contains an alcohol or gasoline, the mass change per hour can be measured after the fuel is sealed in the tubular laminate and left at 60°C. If the fuel contains diesel fuel (gas oil), the mass change per hour can be measured after the fuel is sealed in the tubular laminate and left at 80°C.

The laminate of the present disclosure can have various shapes such as a film shape, a sheet shape, a tube (hose) shape, a bottle shape, and a tank shape. The film shape, the sheet shape, the tube shape, and the hose shape may have a wavy shape, a corrugated shape, a convoluted shape, or the like. The laminate of the present disclosure may be, for example, film, sheet, tube, hose, a bottle, a container, or a tank. The laminate of the present disclosure may be suitably used for fuel tubes or fuel hoses such as automobile fuel tubes or automobile fuel hoses, underground tubes or hoses for fuel supply facilities, automobile fuel tanks, and various automobile seals such as fuel pump O-rings.

In an embodiment, the laminate of the present disclosure is used as a member constituting a system for distributing fuel including at least a compound (1) consisting of a carbon atom, a hydrogen atom and an oxygen atom and having a carbonyl group or an ether bond. The system for distributing fuel means, for example, a system used for storing or supplying fuel. The member used for such a system include a tank, a tube, a hose, a cap, a valve, a diaphragm and a sealing material (an O-ring). The system for distributing fuel is used not only for automobiles but also in a facility for supplying fuel to a fuel tank of automobiles. Typical examples of members constituting the system for distributing fuel include fuel tubes or fuel hoses.

(Tube and hose)

The laminate of the present disclosure may be suitably used as a tube or hose. In the present disclosure, the "tube or hose" includes articles commonly referred to as a tube or hose, which is usually an article that has a shape capable of transporting fluid. In the present disclosure, the term "tube or hose" does not mean that a tube and a hose are different articles.

The tube or hose of the present disclosure may have the same structure as the laminate described above.

The fuel permeation rate of the tube or hose of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

When fuel contains an alcohol, the fuel permeation rate of the tube or hose of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

When fuel contains gasoline, the fuel permeation rate of the tube or hose of the present disclosure is preferably 15 $g/m^2/day$ or less, more preferably 10 $g/m^2/day$ or less, even more preferably 5.0 $g/m^2/day$ or less, and particularly preferably 3.0 $g/m^2/day$ or less.

When fuel contains diesel fuel (gas oil), the fuel permeation rate of the tube or hose of the present disclosure is preferably 8.0 $g/m^2/day$ or less, more preferably 5.0 $g/m^2/day$ or less, and even more preferably 3.0 $g/m^2/day$ or less.

The fuel permeation rate of the tube or hose is the rate at which a fuel including at least a compound (1) consisting of a carbon atom, a hydrogen atom and an oxygen atom and having a carbonyl group or an ether bond permeates the tube or hose. The fuel permeation rate of the tube or hose may be determined by preparing fuel containing compound (1) at a predetermined concentration, sealing the fuel in the tube or hose, leaving it at 60°C or 80°C, measuring the mass change per hour, and calculating the fuel permeation rate from the mass change and the inner area of the tube or hose. If the fuel contains an alcohol or gasoline, the mass change per hour can be measured after the fuel is sealed in the tube or hose and left at 60°C. If the fuel contains diesel fuel (gas oil), the mass change per hour can be measured after the fuel is sealed in the tube or hose and left at 80°C.

The outer diameter of the tube or hose is preferably 2 mm or more, more preferably 3 mm or more, even more preferably 4 mm or more, and most preferably 6 mm or more, and preferably 20 mm or less, more preferably 18 mm or less, even more preferably 16 mm or less, and most preferably 14 mm or less.

The inner diameter of the tube or hose is preferably 1 mm or more, more preferably 2 mm or more, even more preferably 3 mm or more, most preferably 4 mm or more, preferably 15 mm or less, more preferably 13 mm or less, even more preferably 11 mm or less, and most preferably 10 mm or less.

The thickness (a difference between the outer diameter and the inner diameter) of the tube or hose is preferably 0.5 mm or more, more preferably 0.6 mm or more, and even more preferably 0.7 mm or more, and preferably 8 mm or less, more preferably 6 mm or less, even more preferably 4 mm or less, and particularly preferably 2 mm or less.

The thickness of the non-fluorinated polymer layer (A) in the laminate and the tube or hose is preferably 0.05 mm or more, more preferably 0.10 mm or more, and even more preferably 0.15 mm or more, and preferably 0.40 mm or less, more preferably 0.30 mm or less, and even more preferably 0.20 mm or less. The thickness of the non-fluorinated polymer layer (A) is the total thickness of the layers if the laminate and the tube or hose comprises two or more non-fluorinated polymer layers (A).

The thickness of the polymer layer (B) in the laminate and the tube or hose is preferably 0.10 mm or more, more preferably 0.20 mm or more, even more preferably 0.30 mm or more, and preferably 0.90 mm or less, more preferably 0.80 mm or less and even more preferably 0.70 mm or less. The thickness of the polymer layer (B) is the total thickness of the layers if the laminate and the tube or hose comprises two or more polymer layers (B).

The thickness of the electroconductive layer (N1) in the laminate and the tube or hose is preferably 0.05 mm or more, and more preferably 0.10 mm or more, and preferably 0.40 mm or less, more preferably 0.30 mm or less, and even more preferably 0.20 mm or less. The thickness of the electroconductive layer (N1) is the total thickness of the layers if the laminate and the tube or hose comprises two or more electroconductive layers (N1).

The thickness of the fluororesin layer (F) in the laminate and the tube or hose is preferably 0.05 mm or more, and more preferably 0.10 mm or more, and preferably 0.40 mm or less, more preferably 0.30 mm or less, and even more preferably 0.20 mm or less. The thickness of the fluororesin layer (F) is the total thickness of the layers if the laminate and the tube or hose comprises two or more fluororesin layers (F).

The thickness of the non-fluorinated polymer layer (N2) in the laminate and the tube or hose is preferably 0.10 mm or more, more preferably 0.20 mm or more and even more preferably 0.30 mm or more, and preferably 0.90 mm or less, more preferably 0.80 mm or less, and even more preferably 0.70 mm or less. The thickness of the non-fluorinated polymer layer (N2) is the total thickness of the layers if the laminate and the tube or hose comprises two or more non-fluorinated polymer layers (N2).

The tube or hose may have a wavy shape, a corrugated shape, a convoluted shape, or the like. When the tube or hose has a wavy shape, by having a region in which a plurality of annular ridges and grooves in a wavy form are provided,

**EP 4 744 892 A1**

one side of the annulus can be compressed and the other side can be expanded outward in that region, which enables ease of bending the laminate by a desired angle without causing stress fatigue or interlayer delamination.

The method of forming the wavy region is not limited, and the wavy region can be easily formed by creating a straight tube or hose and then, for example, mold-shaping the tube into a predetermined wavy shape or the like.

Examples of the method for producing the laminate of the present disclosure include:

(1) a method involving forming a laminate having a multilayer structure in one step by coextruding the polymers that form the respective layers to thermally fuse (melt-adhere) the layers (coextrusion molding);

(2) a method involving laminating the layers that are separately prepared by an extruder and adhering the layers by thermal fusion;

(3) a method involving forming a laminate by extruding by an extruder, onto the surface of a layer prepared in advance, a polymer that forms a layer to be adjacent to the aforementioned layer; and

(4) a method involving electrostatically coating the surface of a layer prepared in advance with a polymer that forms a layer to be adjacent to the aforementioned layer, and then heating the resulting coated product entirely or from the coated side to thermally melt the polymer subjected to coating, to thereby form a layer.

When the laminate of the present disclosure is a tube or a hose, a method corresponding to the above (2) is (2a) a method involving separately forming each cylindrical layer by an extruder and coating the layer to be an inner layer with the other layer as a heat-shrinkable tube to be in contact with the inner layer; a method corresponding to the above (3) is (3a) a method involving, first, forming a layer to be an inner layer by an inner-layer extruder and forming a layer that is to be in contact with the aforementioned layer on the outer circumferential surface thereof by an outer-layer extruder; and a method corresponding to the above (4) is (4a) a method involving electrostatically applying a polymer for forming an inner layer to the inside of a layer to be in contact with the inner layer, and then placing the resulting coated product in a heating oven to heat the coated product entirely or inserting a rod-shaped heating device into the cylindrical coated product to heat the cylindrical coated product from inside, to thereby thermally melting and molding the polymer for the inner layer.

As long as each layer of the laminate and the tube or hose of the present disclosure can be coextruded, the laminate is generally formed by the coextrusion molding of the above (1). Examples of the coextrusion molding include conventionally known multi-layer coextrusion production methods such as a multi-manifold method and a feed block method.

In the molding methods (2) and (3) above, after each layer is formed, the surface of each layer that comes into contact with another layer may be surface-treated in order to increase interlayer adhesion. Examples of such surface treatment include etching treatment such as sodium etching treatment; corona treatment; and plasma treatment such as low-temperature plasma treatment.

As a method for molding the laminate of the present disclosure, it is also possible to use a molding method involving laminating a plurality of materials in multiple stages by rotational molding. In this case, the melting point of the outer-layer material does not necessarily need to be higher than the melting point of the inner-layer material, and the melting point of the inner-layer material may be 100°C or more higher than the melting point of the outer-layer material. In this case, preferably there is also a heating part inside.

The tube or hose of the present disclosure may be suitably used as fuel tubes or fuel hoses such as automobile fuel tubes or automobile fuel hoses and underground tubes or hoses for fuel supply facilities.

Embodiments have been described above, but it will be understood that various changes in forms and details can be made without departing from the gist and the scope of the claims.

<1> A first aspect of the present disclosure provides

a laminate that comes into contact with a fuel, wherein the fuel includes at least a compound (1) consisting of carbon atom, hydrogen atom and oxygen atom and having carbonyl group or ether bond, and the laminate comprises at least a non-fluorinated polymer layer comprising at least one non-fluorinated polymer selected from the group consisting of an ethylene/vinyl alcohol copolymer and an aromatic polyamide.

<2> A second aspect of the present disclosure provides the laminate according to the first aspect, wherein the compound (1) is at least one selected from the group consisting of a carbonate ester, a chain ether and a cyclic ether.

<3> A third aspect of the present disclosure provides the laminate according to the first or second aspect, wherein the compound (1) is at least one selected from the group consisting of dimethyl carbonate, diethyl carbonate, dimethyl ether, methyl tert-butyl ether, oxymethylene dimethyl ether and 1,3-dioxorane.

<4> A fourth aspect of the present disclosure provides
the laminate according to any of the first to third aspects, wherein the fuel further contains an alcohol.
<5> A fifth aspect of the present disclosure provides
the laminate according to any of the first to fourth aspects, wherein the fuel further contains a gasoline.
<6> A sixth aspect of the present disclosure provides
the laminate according to any of the first to fifth aspects, wherein the fuel further contains a diesel fuel.
<7> A seventh aspect of the present disclosure provides
the laminate according to any of the first to sixth aspects, wherein a content of the compound (1) in the fuel is 0.1 to 20% by volume.
<8> An eighth aspect of the present disclosure provides
the laminate according to any of the first to seventh aspects, wherein the thickness of the non-fluorinated polymer layer is 0.05 to 0.40 mm.
<9> A ninth aspect of the present disclosure provides
the laminate according to any of the first to eighth aspects, further comprising an electroconductive layer which is electrically conductive and contains a non-fluorinated polymer.
<10> A tenth aspect of the present disclosure provides
the laminate according to the ninth aspect, wherein the non-fluorinated polymer is an aromatic polyamide.
<11> An 11th aspect of the present disclosure provides
the laminate according to the ninth or tenth aspect, wherein the electroconductive layer comes into contact with the fuel.
<12> A 12th aspect of the present disclosure provides
the laminate according to any of the first to 11th aspects, further comprising a fluororesin layer comprising a fluororesin.
<13> A 13th aspect of the present disclosure provides
the laminate according to the 12th aspect, wherein the fluororesin is at least one selected from the group consisting of a fluororesin containing ethylene unit and tetrafluoroethylene unit and a fluororesin containing chlorotrifluoroethylene unit and tetrafluoroethylene unit.
<14> A 14th aspect of the present disclosure provides
the laminate according to the 12th or 13th aspect, wherein the fluororesin layer is electrically conductive.
<15> A 15th aspect of the present disclosure provides
the laminate according to any of the 12th to 14th aspects, wherein the fluororesin layer comes into contact with the fuel.
<16> A 16th aspect of the present disclosure provides
the laminate according to any of the first to 15th aspects, wherein the fuel permeation rate of the laminate is 15 $g/m^2/day$ or less.
<17> A 17th aspect of the present disclosure provides
a tube or hose formed of the laminate according to any of the first to the 16th aspects.
<18> An 18th aspect of the present disclosure provides

a tube or hose formed of the laminate according to any of the first to 11th aspects, wherein
the laminate comprises

an electroconductive layer (N1) comprising an electroconductive filler and an aromatic polyamide,
a non-fluorinated polymer layer (A) comprising an aromatic polyamide and
a non-fluorinated polymer layer (N2) comprising an aliphatic polyamide resin

in this order, and
the electroconductive layer (N1) is and innermost layer and comes into contact with a fuel.

<19> A 19th aspect of the present disclosure provides

a tube or hose formed of the laminate according to any of the first to eighth and the 12th to 15th aspects, wherein
the laminate comprises

a fluororesin layer (F) comprising an electroconductive filler and a fluororesin containing ethylene unit and tetrafluoroethylene unit,
a non-fluorinated polymer layer (N2) comprising an aliphatic polyamide resin,
a non-fluorinated polymer layer (A) comprising an ethylene/vinyl alcohol copolymer,
a non-fluorinated polymer layer (N2) comprising an aliphatic polyamide resin, and

a non-fluorinated polymer layer (N2) comprising an aliphatic polyamide resin

in this order, and
the fluororesin layer (F) is an innermost layer and comes into contact with a fuel.

EXAMPLES

Next, embodiments of the present disclosure will now be described by way of Examples, but the present disclosure is not limited solely to the Examples.
The numerical values of the Examples were measured by the following methods.

<Polymer composition (the monomer composition of the fluororesin)>

$^{19}$F-NMR measurement was conducted by using a nuclear magnetic resonance apparatus AC300 (manufactured by Bruker-Biospin AG) to determine the monomer composition of the fluorine resin (the content of the respective monomer units in the polymer) from the integrated values of the peaks. Depending on the kind of monomer, the results of elemental analysis were suitably combined to determine the monomer composition of the fluororesin.

<Melting point>

Thermal measurement was conducted using a differential scanning calorimeter RDC220 (manufactured by Seiko Instruments Inc.) in accordance with ASTM D 4591 at a temperature-increasing rate of 10°C/min, and the melting point of the fluororesin was determined from the peak of the endothermic curve obtained.

<Melt flow rate (MFR)>

The mass (g/10 min) of the fluororesin flowing out from a nozzle having an inner diameter of 2 mm and a length of 8 mm per 10 minutes at 265°C or 297°C under a load of 5 kg was determined as the MFR using a melt indexer (manufactured by Yasuda Seiki Seisakusho Ltd.) in accordance with ASTM D 1238.

<Fuel permeation rate>

The tubes obtained in Experimental Examples and Comparative Experimental Examples were cut and the inner diameter and the length were measured. A swagelok fitting was attached to both ends of the tube, the following fuels were filled into the tube, the lid was tightened, and the mass of the fuel-filled tube was measured. The tubes were then kept at 60°C or 80°C and the mass was measured after 1,000 hours. The mass loss was calculated from each measured mass, and the fuel permeation rate (g/m$^2$/day) was calculated from the mass loss and the inner area of the tube.
In the measurement of the fuel permeation rate, the following fuels containing CE10 (toluene/isooctane/ethanol = 45/45/10% by volume), CM15 (toluene/isooctane/methanol = 42.5/42.5/15% by volume), Fuel C (toluene/isooctane = 50/50% by volume), E (ethanol), M (methanol) and DMC (dimethyl carbonate) at an optional ratio were used. The tube was kept at 60°C when these fuels were used, and the mass was measured after 1,000 hours to calculate the fuel permeation rate.

Fuel (1): CE10 100% by volume
Fuel (2): Fuel C/E/DMC = 85/10/5 (% by volume)
Fuel (3): Fuel C/E/DMC = 80/10/10 (% by volume)
Fuel (4): Fuel C/E/DMC = 70/10/20 (% by volume)
Fuel (5): E/DMC = 10/90 (% by volume)
Fuel (6): DMC 100% by volume
Fuel (7): CM15 100% by volume
Fuel (8): Fuel C/M/DMC = 65/15/20 (% by volume)

Furthermore, in the measurement of the fuel permeation rate, the following fuels containing diesel (diesel fuel) and DMC (dimethyl carbonate) at an optional ratio were used. The tube was kept at 80°C when these fuels were used, and the mass was measured after 1,000 hours to calculate the fuel permeation rate.

Fuel (1): diesel 100% by volume
Fuel (2): diesel/DMC = 95/5 (% by volume)

Fuel (3): diesel/DMC = 90/10 (% by volume)
Fuel (4): diesel/DMC = 80/20 (% by volume)

The following materials were used in Experimental Examples and Comparative Experimental Examples.

Electroconductive polyamide 9T (PA9T cond.)

Genestar TS341 manufactured by Kurary Co., Ltd.
Polyamide 9T (PA9T)
Genestar N1001D manufactured by Kurary Co., Ltd.
Fluororesin A
Polymer composition (mol%): TFE/Et/HFP/2,3,3,4,4,5,5-heptafluoro-1-pentene) = 45.5/44.4/9.5/0.6
Melting point: 197°C
Melt flow rate (265°C): 5.0 g/10 minute
Content of carbon black 12% by mass
Ethylene/vinyl alcohol copolymer (EVOH)
F101B manufactured by Kurary Co., Ltd.
Polyamide 12 (PA12)
Daiamid X7297 manufactured by Polyplastics-Evonik Corporation
Polyamide 612 (PA612)
VESTAMID SX8002 manufactured by Evonik Industries AG

Experimental Examples 1 and 2 and Comparative Experimental Example 1

Using a five-component five-layer tube extrusion apparatus equipped with a multimanifold (manufactured by PLABOR Research Laboratory of Plastics Technology Co., Ltd.), the materials were fed to the extruders, respectively, to mold a multilayer tube having an outer diameter of 8 mm and an inner diameter of 6 mm so that each layer was composed of the material listed in Table 1.

Physical properties were measured using the resulting multilayer tubes by the method described above. The results are shown in Table 2.

[Table 1]

**Table 1**

| | | Experimental Example 1 | Experimental Example 2 | Comparative Experimental Example 1 |
|---|---|---|---|---|
| Layer structure | Inner layer | PA9T cond. | Fluororesin A | Fluororesin A |
| | Adhesive layer | - | PA612 | - |
| | Intermediate layer | PA9T | EVOH | - |
| | Adhesive layer | - | PA612 | - |
| | Outer layer | PA12 | PA12 | PA12 |
| Thickness | Inner layer($\mu$m) | 150 | 100 | 250 |
| | Adhesive layer($\mu$m) | - | 100 | - |
| | Intermediate layer($\mu$m) | 100 | 100 | - |
| | Adhesive layer($\mu$m) | - | 300 | - |
| | Outer layer($\mu$m) | 750 | 400 | 750 |

[Table 2]

**Table 2**

|  | Fuel (% by volume) | DMC (% by volume) | Experimental Example 1 | Experimental Example 2 | Comparative Experimental Example 1 |
|---|---|---|---|---|---|
| Fuel permeation rate (g/m²/day) | CE10 | 0 | 3.0 | 0.6 | 15.0 |
| | FuelC/E/DMC(85/10/5) | 5 | 3.5 | 1.1 | 36.0 |
| | FuelC/E/DMC(80/10/10) | 10 | 2.7 | 0.7 | 46.0 |
| | FuelC/E/DMC(70/10/20) | 20 | 2.2 | 0.7 | 71.0 |
| | E/DMC(10/90) | 90 | 1.1 | 0.6 | - |
| | DMC | 100 | 0.6 | 1.2 | 43.0 |
| | CM15 | 0 | 38.0 | 20.0 | 31.0 |
| | FuelC/M/DMC(65/15/20) | 20 | 70.0 | 22.0 | 140.0 |

Experimental Examples 3 and 4 and Comparative Experimental Examples 2 and 3

Using a five-component five-layer tube extrusion apparatus equipped with a multimanifold (manufactured by PLABOR Research Laboratory of Plastics Technology Co., Ltd.), the materials were fed to the extruders, respectively, to mold a multilayer tube having an outer diameter of 8 mm and an inner diameter of 6 mm so that each layer was composed of the material listed in Table 1.

Physical properties were measured using the resulting multilayer tubes by the method described above. The results are shown in Table 2.

[Table 3]

**Table 3**

|  |  | Experimental Example 3 | Experimental Example 4 | Comparative Experimental Example 2 | Comparative Experimental Example 3 |
|---|---|---|---|---|---|
| Layer structure | Inner layer | PA9T cond. | Fluororesin A | Fluororesin A | PA12 |
| | Adhesive layer | - | PA612 | - | - |
| | Intermediate layer | PA9T | EVOH | - | - |
| | Adhesive layer | - | PA612 | - | - |
| | Outer layer | PA12 | PA12 | PA12 | - |
| Thickness | Inner layer(μm) | 150 | 100 | 250 | 1000 |
| | Adhesive layer(μm) | - | 100 | - | - |
| | Intermediate layer(μm) | 100 | 100 | - | - |
| | Adhesive layer(μm) | - | 300 | - | - |
| | Outer layer(μm) | 750 | 400 | 750 | - |

[Table 4]

**Table 4**

| | Fuel (% by volume) | DMC (% by volume) | Experimental Example 3 | Experimental Example 4 | Comparative Experimental Example 2 | Comparative Experimental Example 3 |
|---|---|---|---|---|---|---|
| Fuel permeation rate (g/m²/day) | diesel | 0 | 0.3 | 0.7 | 2.0 | 1.3 |
| | diesel/DMC(95/5) | 5 | 0.7 | 0.6 | 10.0 | - |
| | diesel/DMC(90/10) | 10 | 0.8 | 0.9 | 25.0 | 40.0 |
| | diesel/DMC(80/20) | 20 | 1.1 | 1.1 | 30.0 | 70.0 |

**Claims**

1. A laminate that comes into contact with a fuel,

    wherein the fuel includes at least a compound (1) consisting of carbon atom, hydrogen atom and oxygen atom and having carbonyl group or ether bond, and
    the laminate comprises at least a non-fluorinated polymer layer comprising at least one non-fluorinated polymer selected from the group consisting of an ethylene/vinyl alcohol copolymer and an aromatic polyamide.

2. The laminate according to claim 1, wherein the compound (1) is at least one selected from the group consisting of a carbonate ester, a chain ether and a cyclic ether.

3. The laminate according to claim 1 or 2, wherein the compound (1) is at least one selected from the group consisting of dimethyl carbonate, diethyl carbonate, dimethyl ether, methyl tert-butyl ether, oxymethylene dimethyl ether and 1,3-dioxorane.

4. The laminate according to any one of claims 1 to 3, wherein the fuel further contains an alcohol.

5. The laminate according to any one of claims 1 to 4, wherein the fuel further contains a gasoline.

6. The laminate according to any one of claims 1 to 5, wherein the fuel further contains a diesel fuel.

7. The laminate according to any one of claims 1 to 6, wherein a content of the compound (1) in the fuel is 0.1 to 20% by volume.

8. The laminate according to any one of claims 1 to 7, wherein the non-fluorinated polymer layer has a thickness of 0.05 to 0.40 mm.

9. The laminate according to any one of claims 1 to 8, further comprising an electroconductive layer which is electrically conductive and contains a non-fluorinated polymer.

10. The laminate according to claim 9, wherein the non-fluorinated polymer is an aromatic polyamide.

11. The laminate according to claim 9 or 10, wherein the electroconductive layer comes into contact with the fuel.

12. The laminate according to any one of claims 1 to 11, further comprising a fluororesin layer comprising a fluororesin.

13. The laminate according to claim 12, wherein the fluororesin is at least one selected from the group consisting of a fluororesin containing ethylene unit and tetrafluoroethylene unit and a fluororesin containing chlorotrifluoroethylene unit and tetrafluoroethylene unit.

14. The laminate according to claim 12 or 13, wherein the fluororesin layer is electrically conductive.

15. The laminate according to any one of claims 12 to 14, wherein the fluororesin layer comes into contact with the fuel.

16. The laminate according to any one of claims 1 to 15, wherein the fuel permeation rate of the laminate is 15 g/m$^2$/day or less.

17. A tube or hose formed of the laminate according to any one of claims 1 to 16.

18. A tube or hose formed of the laminate according to any one of claims 1 to 11, wherein

the laminate comprises

an electroconductive layer (N1) comprising an electroconductive filler and an aromatic polyamide,
a non-fluorinated polymer layer (A) comprising an aromatic polyamide and
a non-fluorinated polymer layer (N2) comprising an aliphatic polyamide resin

in this order, and
the electroconductive layer (N1) is an innermost layer and comes into contact with a fuel.

19. A tube or hose formed of the laminate according to any one of claims 1 to 8 and 12 to 15, wherein

the laminate comprises

a fluororesin layer (F) comprising an electroconductive filler and a fluororesin containing ethylene unit and tetrafluoroethylene unit,
a non-fluorinated polymer layer (N2) comprising an aliphatic polyamide resin,
a non-fluorinated polymer layer (A) comprising an ethylene/vinyl alcohol copolymer,
a non-fluorinated polymer layer (N2) comprising an aliphatic polyamide resin, and
a non-fluorinated polymer layer (N2) comprising an aliphatic polyamide resin

in this order, and
the fluororesin layer (F) is an innermost layer and comes into contact with a fuel.

## INTERNATIONAL SEARCH REPORT

| International application No. |
|---|
| **PCT/JP2024/028566** |

**A. CLASSIFICATION OF SUBJECT MATTER**

*B32B 27/28*(2006.01)i; *B32B 1/08*(2006.01)i; *B32B 27/30*(2006.01)i; *B32B 27/34*(2006.01)i; *C08L 23/04*(2006.01)i; *C08L 27/12*(2006.01)i; *C08L 77/00*(2006.01)i; *F16L 11/04*(2006.01)i

FI:  B32B27/28 102; B32B1/08 B; B32B27/30 D; B32B27/34; C08L23/04; C08L27/12; C08L77/00; F16L11/04

According to International Patent Classification (IPC) or to both national classification and IPC

**B. FIELDS SEARCHED**

Minimum documentation searched (classification system followed by classification symbols)

B32B1/00-43/00; C08L23/04; C08L27/12; C08L77/00; F16L11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2004/069534 A1 (DAIKIN INDUSTRIES, LTD.) 19 August 2004 (2004-08-19) claims, page 5, lines 5-22, page 9, lines 4-18, page 19, lines 4-17, page 22, lines 9-12, page 22, line 21 to page 23, line 9, page 27, lines 15-18, page 28, line 13 to page 29, line 24, tables 2-8 | 1-3, 8, 12-17, 19 |
| A | | 4-7, 9-11, 18 |
| X | JP 2020-112261 A (UBE INDUSTRIES, LTD.) 27 July 2020 (2020-07-27) claims, paragraphs [0014]-[0015], [0055]-[0057], [0109]-[0111], [0117]-[0119], [0129]-[0134], [0169]-[0171], [0211], [0232], examples 1-19, 25-40 | 1-3, 5, 7-18 |
| A | | 4, 6, 19 |
| X | JP 2017-193101 A (UBE INDUSTRIES, LTD.) 26 October 2017 (2017-10-26) claims, paragraphs [0159]-[0163], [0172]-[0175], [0190]-[0192], examples 13, 25, 27, 29 | 1-3, 5, 7-19 |
| A | | 4,6 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
|---|
| **PCT/JP2024/028566** |

**C.** **DOCUMENTS CONSIDERED TO BE RELEVANT**

| Category* | Citation of document, with indication, where appropriate, of the relevant passages | Relevant to claim No. |
|---|---|---|
| X | JP 2014-240148 A (UBE INDUSTRIES, LTD.) 25 December 2014 (2014-12-25) claims, paragraph [0110], examples 1-9 | 1-3, 5, 7-11, 16-18 |
| A | | 4, 6, 12-15, 19 |
| X | JP 2022-44082 A (SUMITOMO RIKO CO., LTD.) 17 March 2022 (2022-03-17) claims, paragraphs [0018]-[0019], [0024], [0027]-[0033], examples 1-10 | 1-3, 8, 12-17 |
| A | | 4-7, 9-11, 18-19 |

Form PCT/ISA/210 (second sheet) (July 2022)

**INTERNATIONAL SEARCH REPORT**
Information on patent family members

International application No.

**PCT/JP2024/028566**

| Patent document cited in search report | | | Publication date (day/month/year) | Patent family member(s) | | | Publication date (day/month/year) |
|---|---|---|---|---|---|---|---|
| WO | 2004/069534 | A1 | 19 August 2004 | JP | 4-69534 | A1 | |
| JP | 2020-112261 | A | 27 July 2020 | (Family: none) | | | |
| JP | 2017-193101 | A | 26 October 2017 | (Family: none) | | | |
| JP | 2014-240148 | A | 25 December 2014 | (Family: none) | | | |
| JP | 2022-44082 | A | 17 March 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005102694 A
- JP 3174018 A

- JP 2019090013 A